(19)

**Europäisches Patentamt**
**European Patent Office**
**Office européen des brevets**

(11) **EP 4 578 581 A1**

(12) **EUROPEAN PATENT APPLICATION**
published in accordance with Art. 153(4) EPC

(43) Date of publication:
**02.07.2025 Bulletin 2025/27**

(21) Application number: 22956454.7

(22) Date of filing: **24.08.2022**

(51) International Patent Classification (IPC):
**B23H 7/10** $^{(2006.01)}$      **B23H 7/02** $^{(2006.01)}$

(52) Cooperative Patent Classification (CPC):
**B23H 7/02; B23H 7/10**

(86) International application number:
**PCT/JP2022/031792**

(87) International publication number:
**WO 2024/042626 (29.02.2024 Gazette 2024/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FANUC CORPORATION**
**Oshino-mura**
**Minamitsuru-gun**
**Yamanashi 401-0597 (JP)**

(72) Inventor: **HASHIMOTO, Taiju**
**Minamitsuru-gun, Yamanashi 401-0597 (JP)**

(74) Representative: **Schmidt, Steffen J.**
**Wuesthoff & Wuesthoff**
**Patentanwälte und Rechtsanwalt PartG mbB**
**Schweigerstrasse 2**
**81541 München (DE)**

(54) **POINT OF ACTION POSITION CALCULATION METHOD AND POINT OF ACTION POSITION CALCULATION DEVICE**

(57)     This fulcrum position calculation method for calculating a fulcrum position of a wire electrode (18) of a wire electrical-discharge working machine (10) comprises: acquiring, from a storage unit (32), a table of fulcrum positions that correspond to each of a plurality of angles including a first angle, which is an angle of inclination of the wire electrode (18); tilting the wire electrode (18) by the first angle; measuring the fulcrum position corresponding to the first angle; calculating the correction value on the basis of the fulcrum position corresponding to the first angle in the table and the fulcrum position corresponding to the first angle that has been measured; and calculating fulcrum positions corresponding to respective angles on the basis of the correction value and the fulcrum positions corresponding to respective angles in the table.

FIG. 1

## Description

### TECHNICAL FIELD

The present disclosure relates to a point of action position calculation method and a point of action position calculation device (a fulcrum position calculation method and a fulcrum position calculation device).

### BACKGROUND ART

JP 2006-035395 A discloses a wire electric discharge machine. The wire electric discharge machine performs taper machining on a workpiece.

### SUMMARY OF THE INVENTION

When taper machining is performed, the fulcrum positions of the wire electrodes in the two wire guides need to be accurately determined. In recent years, a better fulcrum position calculation method and a better fulcrum position calculation device are longed for.

A first aspect of the present disclosure is a fulcrum position calculation method for calculating fulcrum positions of a wire electrode in two wire guides of a wire electric discharge machine, the fulcrum position calculation method comprising: a table acquisition step of acquiring a table from a storage unit that stores, as the table, the fulcrum positions corresponding to each of a plurality of angles including a first angle that is an angle of inclination of the wire electrode with respect to a reference line; a fulcrum position measuring step of tilting the wire electrode to the first angle with respect to the reference line and measuring the fulcrum positions corresponding to the first angle; a correction value calculation step of calculating correction values based on the fulcrum positions corresponding to the first angle in the table and the measured fulcrum positions corresponding to the first angle; and a fulcrum position calculation step of calculating the fulcrum positions corresponding to each of the plurality of angles based on the fulcrum positions corresponding to each of the plurality of angles in the table and the correction values.

A second aspect of the present disclosure is a fulcrum position calculation device for calculating fulcrum positions of a wire electrode in two wire guides of a wire electric discharge machine, the fulcrum position calculation device comprising: a table acquiring unit that acquires a table from a storage unit that stores, as the table, the fulcrum positions corresponding to each of a plurality of angles including a first angle that is an angle of inclination of the wire electrode with respect to a reference line; a fulcrum position measuring unit that tilts the wire electrode to the first angle with respect to the reference line and measures the fulcrum positions corresponding to the first angle; a correction value calculating unit that calculates correction values based on the fulcrum positions corresponding to the first angle in the table and the measured fulcrum positions corresponding to the first angle; and a fulcrum position calculating unit that calculates the fulcrum positions corresponding to each of the plurality of angles based on the fulcrum positions corresponding to each of the plurality of angles in the table and the correction values.

### BRIEF DESCRIPTION OF DRAWINGS

[FIG. 1] FIG. 1 is a schematic diagram of a wire electrical discharge machine;
[FIG. 2] FIG. 2 is a schematic diagram showing a wire electrode in an inclined state;
[FIG. 3] FIG. 3A is a schematic diagram explaining an upper fulcrum position that varies with an angle of inclination of the wire electrode. FIG. 3B is a schematic diagram explaining a lower fulcrum position that changes with an angle of inclination of the wire electrode;
[FIG. 4] FIG. 4 is a table showing examples of upper and lower fulcrum positions corresponding to the angles of inclination of the wire electrode;
[FIG. 5] FIG. 5 is a diagram explaining how to obtain correction values;
[FIG. 6] FIG. 6 is a diagram for explaining a method of calculating an upper fulcrum position and a lower fulcrum position corresponding to each angle;
[FIG. 7] FIG. 7 is a flowchart showing a fulcrum position calculation process executed by a controller.

### DETAILED DESCRIPTION OF THE INVENTION

In order to tilt a wire electrode to an accurate angle, an accurate distance between fulcrum positions must be acquired. The distance between fulcrum positions is obtained from the fulcrum positions of the wire electrode in each of the two wire guides. Because the fulcrum position changes according to an angle of inclination of the wire electrode, it is necessary to obtain the fulcrum positions corresponding to each of the angles by prior measurement.

When the replacement or the like of a wire guide is performed, the position of the wire guide may change. When the position of the wire guide changes, the fulcrum positions corresponding to each angle of the inclination of the wire electrode also change. Therefore, conventionally, the fulcrum positions corresponding to each of the angles are obtained by measurement each time the replacement or the like of the wire guide is performed. However, there is a problem that it takes a long time to obtain the fulcrum positions corresponding to each of the angles by measurement.

The present disclosure aims to reduce the time required to obtain the fulcrum positions corresponding to each of the angles.

[First Embodiment]

[Configuration of Wire Electric Discharge Machine]

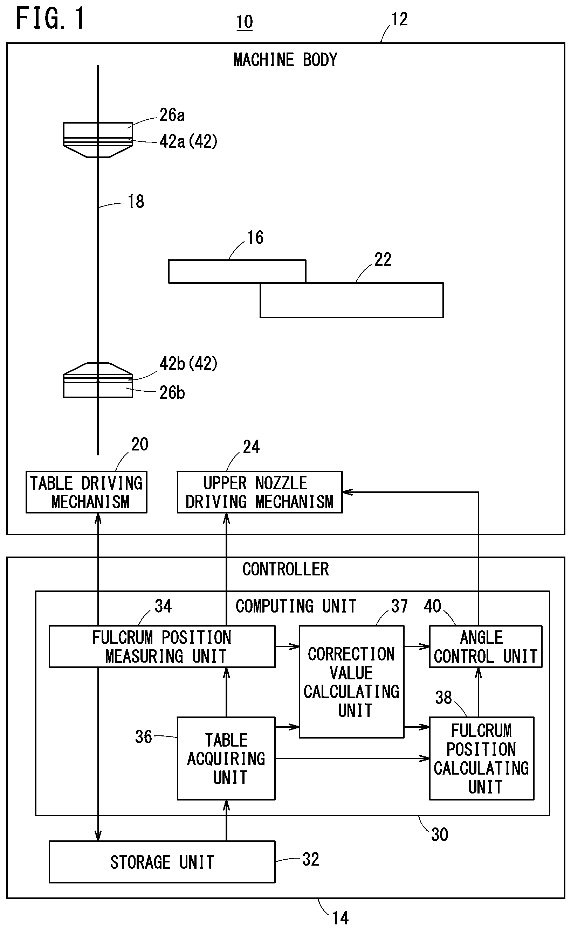

FIG. 1 is a schematic diagram of a wire electric discharge machine 10. The wire electric discharge machine 10 has a machine body 12 and a controller 14.

The machine body 12 applies voltage between a wire electrode 18 and a workpiece 16 to generate electric discharge. Thus, the workpiece 16 is subjected to electric discharge machining.

The controller 14 controls the machine body 12. The controller 14 controls a table driving mechanism 20 to move a table 22. Thereby, in the X-axis direction and the Y-axis direction, the wire electrode 18 moves relatively to the workpiece 16 installed on the table 22.

The controller 14 controls an upper nozzle driving mechanism 24 to move an upper nozzle 26a. Thereby, the upper nozzle 26a is moved in the U-axis direction, the V-axis direction, and the Z-axis direction. The U-axis direction is parallel to the X-axis direction. The V-axis direction is parallel to the Y-axis direction. The Z-axis direction is a direction orthogonal to the U-axis direction and the V-axis direction.

The controller 14 has a computing unit 30 and a storage unit 32. The computing unit 30 is a processor such as a CPU (Central Processing Unit), a GPU (Graphics Processing Unit), or the like. The computing unit 30 includes a fulcrum position measuring unit 34, a table acquiring unit 36, a fulcrum position calculating unit 38, and an angle control unit 40. The fulcrum position measuring unit 34, the table acquiring unit 36, a correction value calculating unit 37, the fulcrum position calculating unit 38, and the angle control unit 40 are realized by the computing unit 30 executing programs stored in the storage unit 32. At least part of the fulcrum position measuring unit 34, the table acquiring unit 36, the correction value calculating unit 37, the fulcrum position calculating unit 38, and the angle control unit 40 may be realized by an integrated circuit such as an ASIC (Application Specific Integrated Circuit), an FPGA (Field-Programmable Gate Array), etc. At least part of the fulcrum position measuring unit 34, the table acquiring unit 36, the correction value calculating unit 37, the fulcrum position calculating unit 38, and the angle control unit 40 may be realized by an electronic circuit including a discrete device.

The storage unit 32 is composed of a volatile memory (not shown) and a nonvolatile memory (not shown), which are computer-readable storage media. The volatile memory is, for example, a RAM (Random Access Memory) or the like. The nonvolatile memory is, for example, ROM (Read Only Memory), flash memory, or the like. Data or the like are stored, for example, in the volatile memory. Programs, tables, maps, or the like are stored, for example, in the non-volatile memory. At least part of the storage unit 32 may be provided in the above-mentioned processor, the integrated circuit, etc. At least part of the storage unit 32 may be mounted on a device connected to the wire electric discharge machine 10 through a network.

The processes performed in the fulcrum position measuring unit 34, the table acquiring unit 36, the correction value calculating unit 37, the fulcrum position calculating unit 38, and the angle control unit 40 of the controller 14 will be described later in detail. The controller 14 corresponds to the fulcrum position calculation device of the present invention.

[Inclination of Wire Electrode]

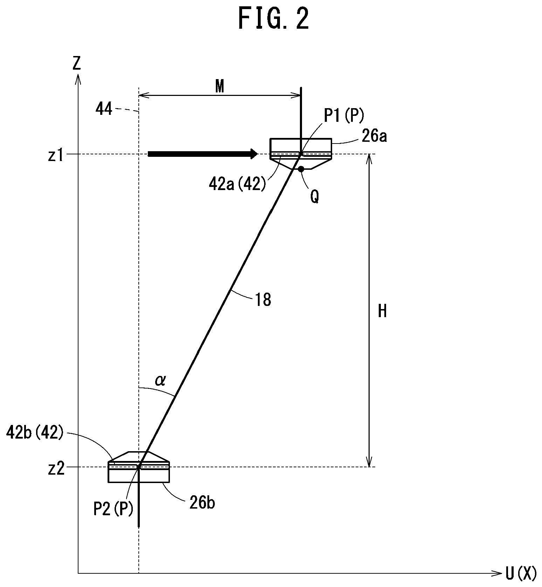

FIG. 2 is a schematic view showing the wire electrode 18 in an inclined state. The upper nozzle 26a has an upper wire guide 42a that supports the wire electrode 18. A lower nozzle 26b has a lower wire guide 42b that supports the wire electrode 18. In the following, when the upper wire guide 42a and the lower wire guide 42b are not distinguished from each other, they may be referred to as wire guide 42.

Hereinafter, the position at which the upper wire guide 42a supports the wire electrode 18 may be referred to as an upper fulcrum position P1. The position at which the lower wire guide 42b supports the wire electrode 18 may be referred to as a lower fulcrum position P2. When the upper fulcrum position P1 and the lower fulcrum position P2 are not distinguished from each other, they may be referred to as fulcrum position P. In addition, a Z-axis coordinate value of the upper fulcrum position P1 may be referred to as upper fulcrum position z1. A Z-axis coordinate value of the lower fulcrum position P2 may be referred to as lower fulcrum position z2.

When the taper machining is performed on the workpiece 16, or when the top-and-bottom different figure machining is performed on the workpiece 16, or the like, the machine body 12 performs the machining of the workpiece 16 with the wire electrode 18 tilted with respect to a reference line 44. The reference line 44 is a line that passes through the lower fulcrum position P2 and is parallel to the Z-axis direction. When the wire electrode 18 is not inclined with respect to the reference line 44, the wire electrode 18 is located on the reference line 44.

The upper fulcrum position P1 moves in the U-axis direction or the V-axis direction together with the upper nozzle 26a. The upper fulcrum position P1 is moved in the U-axis direction or the V-axis direction, whereby the wire electrode 18 is inclined with respect to the reference line 44. The amount of movement of the upper fulcrum position P1 is set according to the angle of inclination of the wire electrode 18 with respect to the reference line 44. In the following, an angle indicates the angle of inclination of the wire electrode 18 with respect to the reference line 44.

For example, the upper fulcrum position P1 is moved in the U-axis direction from the reference line 44 in order to tilt the wire electrode 18 an angle $\alpha$. Let a moving distance be M. The distance between the upper fulcrum position P1 and the lower fulcrum position P2 in the Z-axis direction is defined as an inter-fulcrum distance H. The moving distance M is obtained from the following formula (1) based on the inter-fulcrum distance H and the angle $\alpha$.

$$M = H \times \tan \alpha \quad ... \quad (1)$$

That is, if the inter-fulcrum distance H is known, the moving distance M of the upper nozzle 26a required to set the inclination of the wire electrode 18 to the angle $\alpha$ can be obtained. The inter-fulcrum distance H is obtained by the following formula (2) based on the upper fulcrum position z1 and the lower fulcrum position z2.

$$H = z1-z2 \quad ... \quad (2)$$

The upper fulcrum position z1 and the lower fulcrum position z2 change depending on the angle of inclination of the wire electrode 18. That is, the inter-fulcrum distance H changes with the angle of inclination of the wire electrode 18.

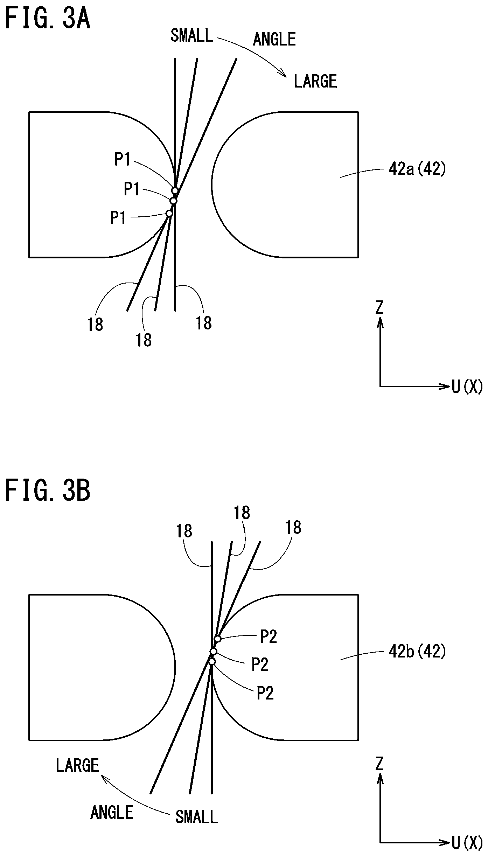

FIG. 3A is a schematic diagram explaining the upper fulcrum position P1 that changes with the angle of inclination of the wire electrode 18. FIG. 3B is a schematic diagram explaining the lower fulcrum position P2 that changes with the angle of inclination of the wire electrode 18. As shown in FIG. 3A, the upper fulcrum position P1 moves in the negative Z-axis direction as the angle of inclination of the wire electrode 18 increases. As shown in FIG. 3B, the lower fulcrum position P2 moves in the positive Z-axis direction as the angle of inclination of the wire electrode 18 increases.

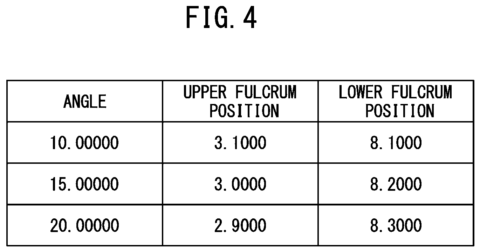

FIG. 4 is a table showing an example of the upper fulcrum positions z1 and the lower fulcrum positions z2 corresponding to the angles of inclination of the wire electrode 18. The upper fulcrum position z1 in FIG. 4 indicates a value with respect to the Z-axis coordinate value of the reference point Q (FIG. 2) of the upper nozzle 26a. The Z-axis coordinate value of the lower fulcrum position z2 in FIG. 4 shows a value with respect to the origin (Z = 0).

The upper fulcrum position z1 and the lower fulcrum position z2 corresponding to each of the angles of the wire electrode 18 is acquired through prior measurement, whereby it is possible to accurately acquire the inter-fulcrum distance H corresponding to each angle.

[Changes in Positions of the Upper Fulcrum Position and the Lower Fulcrum Position due to Replacement or the like of Wire Guide]

The wire guide 42 may be removed or attached because of the replacement or the like of the wire guide 42 by a user.

When the replacement or the like of the wire guide 42 is performed, the position of the wire guide 42 in the Z-axis direction may change. When the position of the wire guide 42 in the Z-axis direction changes, the upper fulcrum position z1 and the lower fulcrum position z2 corresponding to each angle of inclination of the wire electrode 18 also change. However, even when the upper fulcrum position z1 and the lower fulcrum position z2 corresponding to each angle of inclination of the wire electrode 18 change, the relative positions of the upper fulcrum position z1 and the lower fulcrum position z2 corresponding to each angle are invariant.

Therefore, even when the replacement or the like of the wire guide 42 is performed, if the upper fulcrum position z1 and the lower fulcrum position z2 corresponding to one angle are obtained by measurement, the upper fulcrum positions z1 and the lower fulcrum positions z2 corresponding to the other angles can be calculated.

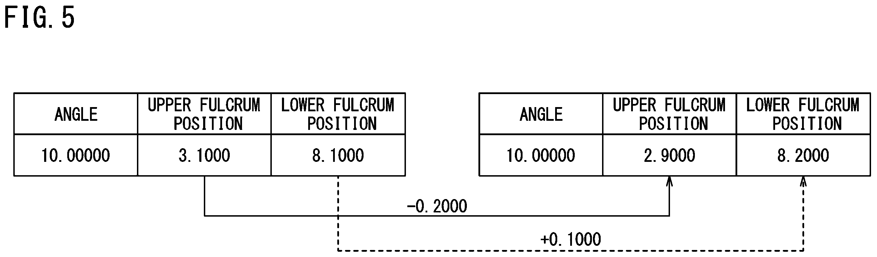

FIG. 5 is a diagram explaining how to obtain correction values. A table on the left side of FIG. 5 shows the upper fulcrum position z1 and the lower fulcrum position z2 corresponding to an angle of 10° obtained by prior measurement. A table on the right side of FIG. 5 shows the upper fulcrum position z1 and the lower fulcrum position z2 corresponding to the angle of 10° obtained by the measurement after the replacement or the like of the wire guide 42 is performed.

As shown in FIG. 5, the difference between the upper fulcrum position z1 obtained by the prior measurement and the upper fulcrum position z1 obtained by the measurement after the replacement or the like of the wire guide 42 is -0.2000. In this embodiment, this -0.2000 is set as the correction value of the upper fulcrum position z1.

As shown in FIG. 5, the difference between the lower fulcrum position z2 obtained by the prior measurement and the lower fulcrum position z2 obtained by the measurement after the replacement or the like of the wire guide 42 is +0.1000. In this embodiment, +0.1000 is set as the correction value of the lower fulcrum position z2.

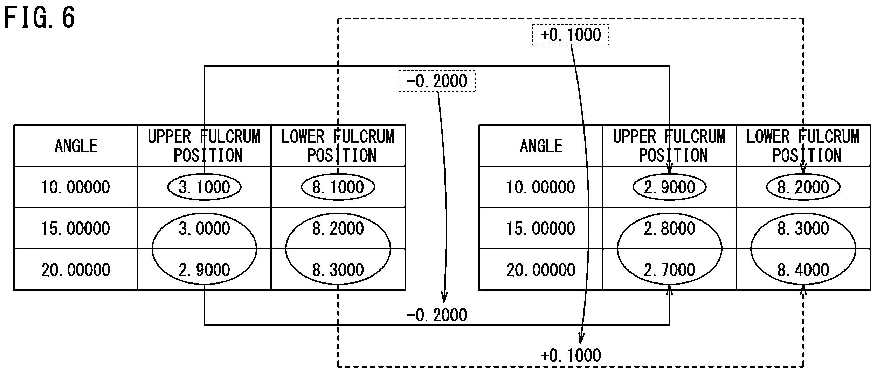

FIG. 6 is a diagram explaining a method of calculating the upper fulcrum position z1 and the lower fulcrum position z2 corresponding to each angle. A table on the left side of FIG. 6 shows the upper fulcrum position z1 and the lower fulcrum position z2 corresponding to each angle obtained by the prior measurement. A table on the right side of FIG. 6 shows the calculated upper fulcrum position z1 and the calculated lower fulcrum position z2 corresponding to each angle.

Using the upper fulcrum position z1 and the lower fulcrum position z2 corresponding to each angle obtained by the prior measurement and the calculated correction values, the upper fulcrum position z1 and the lower fulcrum position z2 corresponding to each angle after the wire guide 42 is replaced or the like are calculated.

[Processing in Controller]

As described above, the controller 14 includes the fulcrum position measuring unit 34, the table acquiring unit 36, the fulcrum position calculating unit 38, and the angle control unit 40.

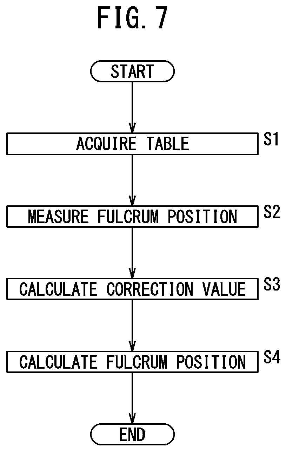

FIG. 7 is a flowchart showing the fulcrum position calculation process executed by the controller 14.

The prior measurement of the upper fulcrum position z1 and the lower fulcrum position z2 corresponding to each angle is performed by the fulcrum position measuring unit 34 before the fulcrum position calculation process is executed.

The fulcrum position measuring unit 34 measures the upper fulcrum position z1 and the lower fulcrum position z2 for cases where the inclination of the wire electrode 18 is at each of angles including an angle of 10°. The measurement methods for the upper fulcrum position z1 and the lower fulcrum position z2 are known and thus the description thereof is omitted.

The process of measuring the upper fulcrum position z1 and the lower fulcrum position z2 corresponding to each angle in advance only needs to be performed once in the wire electric discharge machine 10. Alternatively, the process of measuring the upper fulcrum position z1 and the lower fulcrum position z2 corresponding to each angle in advance may be performed for each type of the upper wire guide 42a and the lower wire guide 42b. The previously measured upper fulcrum position z1 and lower fulcrum position z2 are associated with each angle and stored in the storage unit 32 as a table.

When the replacement or the like of the wire guide 42 is performed, the controller 14 performs a fulcrum position calculation process according to the flowchart shown in FIG. 7.

In step S1, the table acquiring unit 36 acquires a table from the storage unit 32. Then, the process proceeds to step S2.

In step S2, the fulcrum position measuring unit 34 measures the upper fulcrum position z1 and the lower fulcrum position z2 when the inclination of the wire electrode 18 is at an angle of 10°. Then, the process proceeds to step S3.

In step S3, the correction value calculating unit 37 calculates correction values. Then, the process proceeds to step S4. Differences are calculated as correction values between the upper fulcrum position z1 and the lower fulcrum position z2 corresponding to an angle of 10° in the table and the upper fulcrum position z1 and the lower fulcrum position z2 measured in step S2 in the case of the angle of 10°.

In step S4, the fulcrum position calculating unit 38 calculates the upper fulcrum position z1 and the lower fulcrum position z2 corresponding to each angle. Then, the fulcrum position calculation process is terminated. The upper fulcrum position z1 and the lower fulcrum position z2 corresponding to each angle are calculated based on the upper fulcrum z1 and the lower fulcrum position z2 corresponding to each angle in the table and the correction values. The calculated upper fulcrum position z1 and the lower fulcrum position z2 may be associated with each angle and stored in the storage unit 32.

The angle control unit 40 calculates the inter-fulcrum distance H by the aforementioned formula (2) based on the upper fulcrum position z1 and the lower fulcrum position z2 corresponding to the angle α of inclination of the wire electrode 18 specified during the machining. The angle control unit 40 calculates the moving distance M of the upper nozzle 26a by the aforementioned formula (1) based on the specified angle α and the inter-fulcrum distance H. The angle control unit 40 controls the upper nozzle driving mechanism 24 to move the upper nozzle 26a from the reference line 44 by the moving distance M. In this way, the inclination of the wire electrode 18 is set to the specified angle α.

In the above, the correction value calculating unit 37 calculates the correction values based on the upper fulcrum position z1 and the lower fulcrum position z2 corresponding to the angle of inclination 10° of the wire electrode 18. On the other hand, the correction value calculating unit 37 may calculate the correction values based on the upper fulcrum positions z1 and the lower fulcrum positions z2 corresponding to angles other than the angle 10° of the inclination of the wire electrode 18. In this case, in the above-mentioned step S2, the fulcrum position measuring unit 34 needs to measure the upper fulcrum position z1 and the lower fulcrum position z2 with respect to the angle of the wire electrode 18 used in the calculation of the correction values.

[Effect]

In order to tilt the wire electrode 18 to an accurate angle, an accurate inter-fulcrum distance H is required. The inter-fulcrum distance H is obtained from the upper fulcrum position z1 and the lower fulcrum position z2. Because the upper fulcrum position z1 and the lower fulcrum position z2 change according to the angle of inclination of the wire electrode 18, it is necessary to obtain the upper fulcrum position z1 and the lower fulcrum position z2 corresponding to each of the angles by prior measurement.

When the replacement or the like of the wire guide 42 is performed, the position of the wire guide 42 in the Z-axis direction may change. When the position of the wire guide 42 in the Z-axis direction changes, the upper fulcrum position z1 and the lower fulcrum position z2 corresponding to each angle of inclination of the wire electrode 18 also change. Therefore, conventionally, whenever the replacement or the like of the wire guide 42 was performed, the upper fulcrum position z1 and the lower fulcrum position z2 corresponding to each of the angles was obtained by measurement. However, there is a problem that it takes a long time to obtain the upper fulcrum position z1 and the lower fulcrum position z2 corresponding to each of the angles by measurement.

The present inventors have focused on the fact that the relative positions of the upper fulcrum position z1 and the lower fulcrum position z2 corresponding to each angle of inclination of the wire electrode 18 are invariant even when the upper fulcrum position z1 and the lower fulcrum position z2 corresponding to each angle are changed.

In this embodiment, a fulcrum position calculation method for calculating the upper fulcrum position z1 and the lower fulcrum position z2 of the wire electric discharge machine 10 is disclosed. In the fulcrum position calculation method, a table is acquired from the storage unit 32. The storage unit 32 stores, as a table, the upper fulcrum position z1 and the lower fulcrum position z2 corresponding to each of the angles including a first angle (for example, an angle of 10°) that are angles of inclination of the wire electrode 18 with respect to the reference line 44. The wire electrode 18 is tilted to the first angle, and the upper fulcrum position z1 and the lower fulcrum position z2 corresponding to the first angle are measured. Correction values are calculated based on the upper fulcrum position z1 and the lower fulcrum position z2 corresponding to the first angle in the table and the measured upper fulcrum position z1 and the measured lower fulcrum position z2 corresponding to the first angle. Based on the upper fulcrum position z1 and the lower fulcrum position z2 corresponding to each angle in the table and the correction values, the upper fulcrum position z1 and the lower fulcrum position z2 corresponding to each angle are calculated.

In addition, in this embodiment, the controller 14 is disclosed as a fulcrum position calculation device for calculating the upper fulcrum position z1 and the lower fulcrum position z2 of the wire electric discharge machine 10. In the controller 14, the table acquiring unit 36 acquires a table from the storage unit 32. The storage unit 32 stores, as the table, the upper fulcrum position z1 and the lower fulcrum position z2 corresponding to each of the angles including a first angle (for example, an angle of 10°) that are angles of inclination of the wire electrode 18 with respect to the reference line 44. The fulcrum position measuring unit 34 tilts the wire electrode 18 to the first angle with respect to the reference line 44 and measures the upper fulcrum position z1 and the lower fulcrum position z2 corresponding to the first angle. The correction value calculating unit 37 calculates correction values based on the upper fulcrum position z1 and the lower fulcrum position z2 corresponding to the first angle in the table and the measured upper fulcrum position z1 and the measured lower fulcrum position z2 corresponding to the first angle. The fulcrum position calculating unit 38 calculates the upper fulcrum position z1 and the lower fulcrum position z2 corresponding to each angle based on the upper fulcrum position z1 and the lower fulcrum position z2 corresponding to each angle in the table and the correction values.

Thus, when the replacement or the like of the wire guide 42 is performed, if the upper fulcrum position z1 and the lower fulcrum position z2 corresponding to the first angle can be obtained by measurement, the upper fulcrum position z1 and the lower fulcrum position z2 corresponding to each of the angles can be obtained by calculation. As a result, it is possible to reduce the time required to obtain the upper fulcrum position z1 and the lower fulcrum position z2 corresponding to each of the angles after the replacement or the like of the wire guide 42.

With respect to the above embodiments, the following supplementary notes are further disclosed.

(Supplementary note 1)

A fulcrum position calculation method for calculating fulcrum positions of a wire electrode (18) in two wire guides (42) of a wire electric discharge machine (10), the fulcrum position calculation method comprising: a table acquisition step of acquiring a table from a storage unit (32) that stores, as the table, the fulcrum positions corresponding to each of a plurality of angles including a first angle that is an angle of inclination of the wire electrode with respect to a reference line (44); a fulcrum position measuring step of tilting the wire electrode to the first angle with respect to the reference line and measuring the fulcrum positions corresponding to the first angle; a correction value calculation step of calculating correction values based on the fulcrum positions corresponding to the first angle in the table and the measured fulcrum positions corresponding to the first angle; and a fulcrum position calculation step of calculating the fulcrum positions corresponding to each of the plurality of angles based on the fulcrum positions corresponding to each of the plurality of angles in the table and the correction values. This can reduce the time required to obtain the fulcrum positions corresponding to each of the angles.

(Supplementary note 2)

The fulcrum position calculation method according to Supplementary note 1, further comprising a storage step of, before the wire electrode is removed, tilting the wire electrode to the plurality of angles including the first angle with respect to the reference line, measuring the fulcrum positions corresponding to each of the plurality of angles, and storing, as a table, the measured fulcrum positions corresponding to each of the plurality of angles in the storage unit, and wherein the fulcrum position measuring step is performed after the wire electrode is removed or attached. This can reduce the time required to obtain the fulcrum positions corresponding to each of the angles.

(Supplementary note 3)

A fulcrum position calculation device (14) for calculating fulcrum positions of a wire electrode in two wire guides of a wire electric discharge machine, the fulcrum position calculation device comprising: a table acquiring unit (36) that acquires a table from the storage unit that stores, as the table, the fulcrum positions corresponding to each of a plurality of angles including a first angle that is an angle of inclination of the wire electrode with respect to the reference line; a fulcrum position measuring unit (34) that tilts the wire electrode to the first angle with respect to the reference line and measures the fulcrum positions corresponding to the first angle; a correction value calculating unit (37) that calculates correction values based on the fulcrum positions corresponding to the first angle in the table and the measured fulcrum positions corresponding to the first angle; and a fulcrum position calculating unit (38) that calculates the fulcrum positions corresponding to each of the plurality of angles based on the fulcrum positions corresponding to each of the plurality of angles in the table and the correction values. This can reduce the time required to obtain the fulcrum positions corresponding to each of the angles.

Although embodiments of the present disclosure have been described in detail, the present disclosure is not limited to the individual embodiments described above. These embodiments can be variously added, replaced, changed, partially deleted, etc., without departing from the scope of the invention or the ideas and purport of the invention derived from the contents described in the claims and their equivalents. For example, in the above-described embodiments, the order of the operations and the order of the processes are shown as an example, and are not limited to these. The same applies to the case where numerical values or mathematical expressions are used in the description of the above-described embodiments.

REFERENCE SIGNS LIST

10: wire electric discharge machine
14: fulcrum position calculation device (controller)
18: wire electrode
32: storage unit
34: fulcrum position measuring unit
36: table acquiring unit
37: correction value calculating unit
38: fulcrum position calculating unit
42: wire guide
44: reference line

**Claims**

1. A fulcrum position calculation method for calculating fulcrum positions of a wire electrode (18) in two wire guides (42) of a wire electric discharge machine (10), the fulcrum position calculation method comprising:

   a table acquisition step of acquiring a table from a storage unit (32) that stores, as the table, the fulcrum positions corresponding to each of a plurality of angles including a first angle that is an angle of inclination of the wire electrode with respect to a reference line (44);
   a fulcrum position measuring step of tilting the wire electrode to the first angle with respect to the reference line and measuring the fulcrum positions corresponding to the first angle;
   a correction value calculation step of calculating correction values based on the fulcrum positions corresponding to the first angle in the table and the measured fulcrum positions corresponding to the first angle; and
   a fulcrum position calculation step of calculating the fulcrum positions corresponding to each of the plurality of angles based on the fulcrum positions corresponding to each of the plurality of angles in the table and the correction values.

2. The fulcrum position calculation method according to claim 1, further comprising

   a storage step of, before the wire electrode is removed, tilting the wire electrode to the plurality of angles including the first angle with respect to the reference line, measuring the fulcrum positions corresponding to each of the plurality of angles, and storing, as a table, the measured fulcrum positions corresponding to each of the plurality of angles in the storage unit,
   wherein the fulcrum position measuring step is performed after the wire electrode is removed or attached.

3. A fulcrum position calculation device (14) for calculating fulcrum positions of a wire electrode in two wire guides of a wire electric discharge machine, the fulcrum position calculation device comprising:

   a table acquiring unit (36) that acquires a table from the storage unit that stores, as the table, the fulcrum positions corresponding to each of a plurality of angles including a first angle that is an angle of inclination of the wire electrode with respect to the reference line;
   a fulcrum position measuring unit (34) that tilts the wire electrode to the first angle with respect to the reference line and measures the fulcrum positions corresponding to the first angle;
   a correction value calculating unit (37) that calculates correction values based on the fulcrum positions corresponding to the first angle in the table and the measured fulcrum positions corresponding to the first angle; and
   a fulcrum position calculating unit (38) that calculates the fulcrum positions corresponding to each of the plurality of angles based on the fulcrum positions corresponding to each of the plurality of angles in the table and the correction values.

# FIG. 1

**MACHINE BODY** 12

10

26a
42a (42)

18

16
22

42b (42)
26b

20
**TABLE DRIVING MECHANISM**

24
**UPPER NOZZLE DRIVING MECHANISM**

**CONTROLLER**

**COMPUTING UNIT**

34
**FULCRUM POSITION MEASURING UNIT**

37
**CORRECTION VALUE CALCULATING UNIT**

40
**ANGLE CONTROL UNIT**

36
**TABLE ACQUIRING UNIT**

38
**FULCRUM POSITION CALCULATING UNIT**

30

32
**STORAGE UNIT**

14

# FIG. 2

FIG. 3A

FIG. 3B

# FIG. 4

| ANGLE | UPPER FULCRUM POSITION | LOWER FULCRUM POSITION |
|---|---|---|
| 10. 00000 | 3. 1000 | 8. 1000 |
| 15. 00000 | 3. 0000 | 8. 2000 |
| 20. 00000 | 2. 9000 | 8. 3000 |

FIG. 5

| ANGLE | UPPER FULCRUM POSITION | LOWER FULCRUM POSITION |
|---|---|---|
| 10.00000 | 3.1000 | 8.1000 |

−0.2000

+0.1000

| ANGLE | UPPER FULCRUM POSITION | LOWER FULCRUM POSITION |
|---|---|---|
| 10.00000 | 2.9000 | 8.2000 |

FIG. 6

| ANGLE | UPPER FULCRUM POSITION | LOWER FULCRUM POSITION |
|---|---|---|
| 10.00000 | 3.1000 | 8.1000 |
| 15.00000 | 3.0000 | 8.2000 |
| 20.00000 | 2.9000 | 8.3000 |

−0.2000

+0.1000

| ANGLE | UPPER FULCRUM POSITION | LOWER FULCRUM POSITION |
|---|---|---|
| 10.00000 | 2.9000 | 8.2000 |
| 15.00000 | 2.8000 | 8.3000 |
| 20.00000 | 2.7000 | 8.4000 |

−0.2000

+0.1000

# FIG. 7

```
        ( START )
            │
            ▼
┌─────────────────────────┐
│     ACQUIRE TABLE       │ S1
└─────────────────────────┘
            │
            ▼
┌─────────────────────────┐
│  MEASURE FULCRUM POSITION │ S2
└─────────────────────────┘
            │
            ▼
┌─────────────────────────┐
│ CALCULATE CORRECTION VALUE │ S3
└─────────────────────────┘
            │
            ▼
┌─────────────────────────┐
│ CALCULATE FULCRUM POSITION │ S4
└─────────────────────────┘
            │
            ▼
         ( END )
```

## INTERNATIONAL SEARCH REPORT

| International application No. |
| --- |
| **PCT/JP2022/031792** |

### A. CLASSIFICATION OF SUBJECT MATTER

**B23H 7/10**(2006.01)i; **B23H 7/02**(2006.01)i
FI: B23H7/10 B; B23H7/02 R

According to International Patent Classification (IPC) or to both national classification and IPC

### B. FIELDS SEARCHED

Minimum documentation searched (classification system followed by classification symbols)

B23H1/00-11/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2008-290172 A (FANUC CORP.) 04 December 2008 (2008-12-04) paragraphs [0019]-[0067], fig. 3-7 | 1-3 |
| A | JP 1-193126 A (BROTHER KOGYO KABUSHIKI KAISHA) 03 August 1989 (1989-08-03) p. 3, upper right column, line 8 to p. 6, lower left column, line 5, fig. 1-4 | 1-3 |
| A | WO 2015/145529 A1 (MITSUBISHI ELECTRIC CORP.) 01 October 2015 (2015-10-01) paragraphs [0010]-[0053], fig. 1-8 | 1-3 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 October 2022** | **08 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/031792**

| Patent document cited in search report | | | Publication date (day/month/year) | Patent family member(s) | | | Publication date (day/month/year) |
|---|---|---|---|---|---|---|---|
| JP | 2008-290172 | A | 04 December 2008 | US | 2008/0290071 | A1 | |
| | | | | paragraphs [0023]-[0090], fig. 3-7 | | | |
| | | | | EP | 1995012 | A2 | |
| | | | | CN | 101311670 | A | |
| JP | 1-193126 | A | 03 August 1989 | (Family: none) | | | |
| WO | 2015/145529 | A1 | 01 October 2015 | US | 2017/0095869 | A1 | |
| | | | | paragraphs [0031]-[0074], fig. 1-8 | | | |
| | | | | CN | 106163716 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006035395 A